# EUROPEAN PATENT SPECIFICATION

(11) **EP 1 512 626 B1**
(45) Date of publication and mention of the grant of the patent: **24.05.2006**
(21) Application number: 04077271.7
(22) Date of filing: 11.08.2004
(51) Int. Cl.: B64D 17/38, F42B 3/00, B23D 15/14

(54) **Parachute line cutting device**
Schneidevorrichtung für ein Fallschirmseil
Dispositif de coupure d'une ligne d'un parachute

(30) Priority: 11.08.2003 EP 03077538
(43) Date of publication of application: 09.03.2005
(73) Proprietor: B & B Controls, 1030 Bruxelles (BE); Socofimmo Holding S.A., 1526 Luxembourg (LU)
(72) Inventor: Smolders, Jo, 3150 Wespelaar (BE)
(74) Representative: Quintelier, Claude

(56) References cited:
- DE-A- 19 709 316
- GB-A- 516 869
- US-A- 2 924 147
- US-A- 2 926 565

## Description

The present invention relates to a parachute line cutting device comprising a cutter member mounted inside a first housing having an opening providing a passage for said parachute line, said cutting device further comprising a firing element provided for projecting said cutter member towards said line after having been ignited in order to cut the latter, said firing element being connected to flexible electrical wires which are themselves connectable to a power supply source. More particularly, the present invention concerns pyrotechnically actuated explosive line cutters.

Explosive line cutters have been known for many years. These devices are particularly useful, for example, in the staged deployment of parachutes. The main parachute is deployed in stages, which stages are controlled by reefing lines. A line cutter is a useful device to permit reefing lines to be severed sequentially during staged deployment and also to effect engagement of a reserve chute if a main chute didn't open where necessary. Thus, it is particularly important that the line cutting devices be highly reliable. A typical line cutting device includes an anvil and a cutter member which is movable toward the anvil, but spaced therefrom by a distance which permits the line to be severed to pass there between. The cutter member is typically propelled by a conventional explosive actuator assembly, which may include a primer, a delay charge and an explosive charge. Typically, such line cutters are actuated by pyrotechnical charge.

In the known devices the cutter member is projected towards the line after ignition of the firing element. When use is made of explosive cutters, the explosive material in the firing element is ignited by means of an electrical discharge. To this purpose electrical wires connect the firing element with a power su pply source. Such a line cutting device is for example illustrated in US-A-3,991,679 issued to Patrichi and in US-A-2,924,147 issued to Bohl et al.

In use the line cutting device is exposed to mechanical strength and it must also be able to operate reliably through a wide range of altitudes, pressures, temperatures, humidity and traction conditions. To the extent that those parameters can affect a pyrotechnically actuated device, measures must be taken to reduce any adverse effects resulting from variations in those parameters. In addition, since a line cutting device is often associated with the deployment of a parachute it will also be appreciated that a line cutting device must stay very reliable.

Different types of devices have also been proposed for explosively destroying part of a line rather than cutting the line. For example, it has been proposed to use an explosive charge which is embedded in a braided rope or cable and connected to an igniting device may, for example, including a fulminating compound surrounding a barbed wire, which compound is fired when the barbed wire is withdrawn. Such a destructible link device is shown, for example, in US-A- 2,768,802 issued to Dejean.

A drawback of the known devices is that a high mechanical force is applied on the electric wires, which could lead to a mechanical rupture of the electrical connection and thus to a malfunctioning of the firing element, thus leading to an inaccurate line cutting.

It is an object of the present invention to realise a parachute line cutting device where less mechanical force is applied on the electrical wires.

For this purpose a parachute line cutting device according to the invention is characterised in that said wires are surrounded by at least one strengthening cord made of a material which is less elastic than said wires, said strengthening cord being fixed to a second housing wherein said firing element is lodged. In such a manner the mechanical force is mainly applied on the strengthening cord since the latter is lees elastic than the wire. The wires feel much less the force and remain therefor connected to the firing element.

A first preferred embodiment of a parachute line cutting device according to the invention is characterised in that the cord(s) are knotted around a rigid pin, in particular made of stainless steel, lodged in a location adapted within the second housing. This enables a reliable connection between cord and second housing.

A second preferred embodiment of a parachute line cutting device according to the invention is characterised in that the flexible electrical wires are solidified at their end located inside said second housing in order to form a stiff portion to which a fine wire bridge is electrically bonded. This will permit both attachment of the fine wire directly to each electrical wire and application of the spot charge. The advantage of this technique is the avoidance of any intermediate connections between the control device and the spot charge.

A third preferred embodiment of a parachute line cutting device according to the invention is characterised in that said line is made of meltable material and wherein said firing element is provided to produce upon ignition sufficient heat in order to melt a section of said line. The cut middle portion of the line will also be melted if not completely cut due to the high temperature of the cutter member obtained after the explosion of a pyrotechnic charge to increase the temperature and due to the adapted size and shape of the security blade to secure cutting action.

The invention will now be described in more details with reference to the annexed drawings illustrating a preferred embodiment of a parachute line cutting device according to the invention. In the drawings :
figure 1 shows an overall view of a line cutting device according to the invention;
figure 2 shows the inside of a line cutting device according to the invention;
figure 3 shows a detailed view how the cord is applied on the second housing; and
figure 4 shows a detailed view of the firing element;

In the drawings a same reference number has been assigned to a same or analogous element.

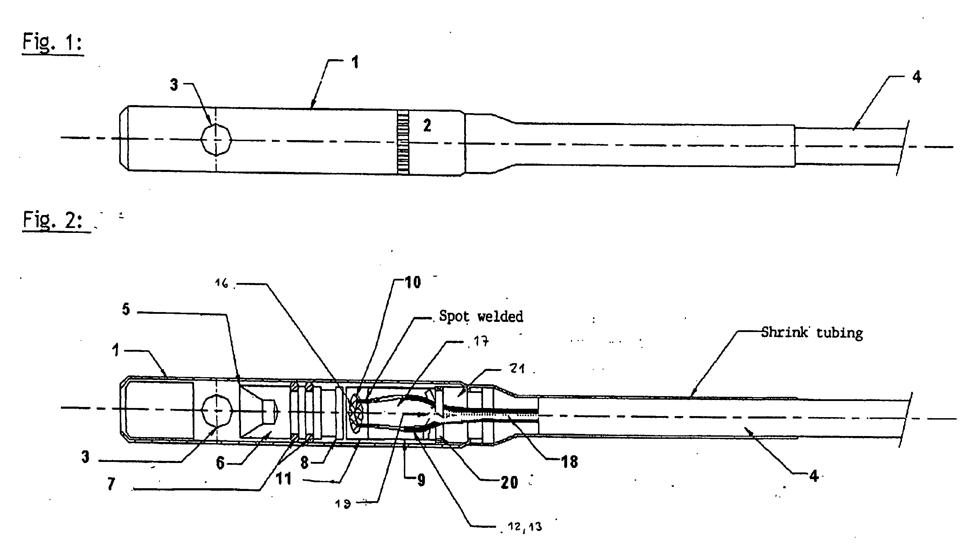

The parachute line cutting 1 device according to the invention and illustrated in figure 1 comprises a first housing 2 having an opening 3 provided for the passage of the line (not shown) to be cut. A flexible shielded cable 4, leaving the first housing, comprises electrical wires leading to a power supply source (not shown).

Inside the first housing, as illustrated in figure 2, a cutter member 5 is lodged. The front end of the cutter member is situated near the opening 3 in such a manner that the cutter member is near the line crossing the opening. Preferably the cutter member has a circular cutter blade and is conically shaped. This enables to cut the line at two different places. The cutter member is formed as the front end of a pen 6 around which two O-rings 7 are wrapped. A smooth movement of the cutter member inside the first housing is thus obtained.

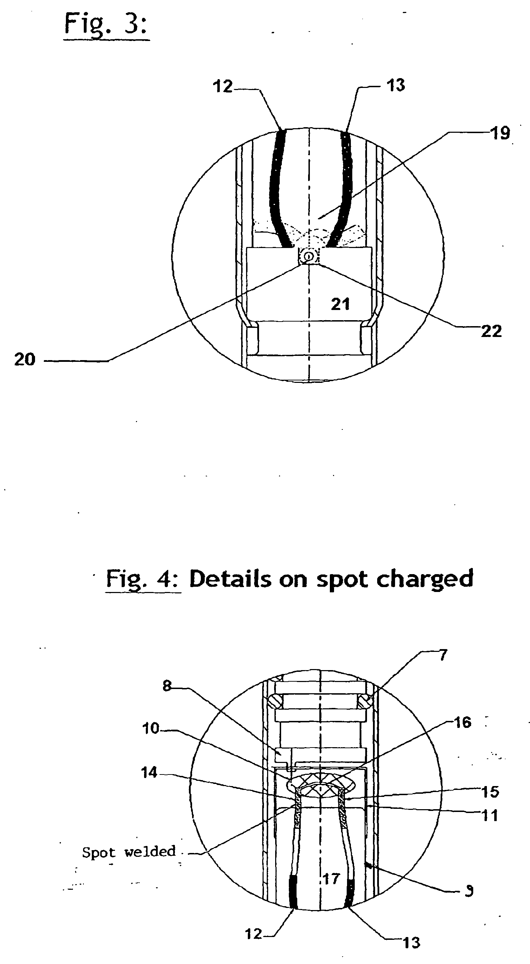

As is further illustrated in figure 4, a back end 8 of the pen 6 faces a front end of a second housing 9 mounted inside the first housing. The second housing lodges a firing element 10, which is protected by a cap 11. The firing element is preferably made of pyrotechnic material. The composition of the pyrotechnic material determines the air volume produced due the explosion in the device and the heat produced of the latter material and thus also the heat transferred to the cutter member.

Two flexible electrical wires 12 and 13 penetrate inside the second housing 9 and extend up to the volume covered by the cap 11. Those wires supply the electric power to the firing element in order to ignite the latter. The wires are solidified at their ends 14 and 15 located inside the cap. In such a manner the solidified ends form a stiff portion to which a fine wire bridge 16 is electrically bonded. This set-up is comparable to the one used in electric light bulbs. The solidification of the wire ends is for example realised by fuse head welding of the multi thread wire ends. The application of the fine wire bridge to the wire ends is preferably realised by spot welding.

The stiff portion as well as a part of the wires is molded within a rigidifying material 17 and the solidified ends 14 and 15 extend slightly beyond the molded rigidifying material. In such a manner they from the electrodes to which the fine wire bridge 16 is spot weld. The rigidifying material is preferably formed by epoxy or rubber.

As illustrated in figure 3, the second housing is provided with a locking member 21 applied at the opposite end of the one to which the cap 11 is applied. The locking member is substantially cylindrically shaped and provided with a diagonally extending recess 22 applied at a front end thereof. A rigid pin 20, preferably made of stainless steel, is lodged into said recess 22. The locking member is provided with a front and a back opening in order to enable the passage of the wires 12 and 13. At least one strengthening cord 18 (figure 2) surrounds the wires 12 and 13. The strengthening cord is made of a material which is less elastic than the one of which the wires are made. Preferably the cord 18 is made of Kevlar (a registered trademark of Dupont de Nemours).

The strengthening cord is fixed to the second housing by means of the pin 20. To this purpose the cord end is knotted (illustrated by knot 19) around the pin 20, thereby attaching the cord to the locking member since the pin is lodged in the recess 22. When now a mechanical force or tension is applied on cable 4, for example on ignition of the firing element, the majority of the force or tension will be picked up by the cord 18 since the latter is less elastic than the wires 12 and 13. The latter will feel nearly no force or tension, thereby reducing the risk to destroy the electrical connection with the firing element. A major part of the force or tension is picked up by the cord and exerted on the pin.

The cord end and the knot 19 are also preferably molded in the rigidifying material 17. An entity of cord and wires inside the second housing is thereby obtained.

Preferably said line is made of meltable material such as for example Dacron (a registered trademark of Dupont de Nemours)). As already mentioned said firing element is provided to produce upon ignition sufficient heat in order to melt a section of said line. Indeed with a suitable choice of the material of which the line is made and with an adapted choice of the pyrotechnic material, sufficient heat can be produced to melt the line. The small dimension of the cutter member will accumulate the heat in the cutter member in order to supply sufficient heat to also melt the line, thereby improving the cutting process and thus the reliability of the device. By using a cylindrical cutter blade the line is cut at two places and this double cut, combined with a melt of the material, perfectly co-operate. The conical shape of the cutter member is dimensioned to form a receptacle of sufficient dimension for receiving the melt line section.

## Claims

1. A parachute line cutting device (1) comprising a cutter member (5) mounted inside a first housing (2) having an opening (3) providing a passage for said parachute line, said cutting device further comprising a firing element (10) provided for projecting said cutter member towards said line after having been ignited in order to cut the latter, said firing element being connected to flexible electrical wires (12,13) which are themselves connectable to a power supply source, c**haracterised in that** said wires are surrounded by at least one strengthening cord (18) made of a material which is less elastic than said wires, said strengthening cord being fixed to a second housing (9) wherein said firing element is lodged.

2. A parachute line cutting device as claimed in claim 1, **characterised in that** the cord(s) (18) are knotted (19) around a rigid pin (20), in particular made of stainless steel, lodged in a recess adapted within the second housing.

3. A parachute line cutting device as claimed in claim 1 or 2, **characterised in that** the flexible electrical wires are solidified at their ends (14, 15) located inside said second housing in order to form a stiff portion to which a fine wire bridge (16) is electrically bonded.

4. A parachute line cutting device as claimed in claim 3, **characterised in that** said stiff portion is molded within a rigidifying material (17) in particular epoxy or rubber, and wherein the solidified wire ends (14,15) extend slightly beyond the molded rigidifying material.

5. A parachute line cutting device as claimed in any one of the claims 1 to 4, **characterised in that** said line is made of meltable material and wherein said firing element (10) is provided to produce upon ignition sufficient heat to be accumulated into the cutter member in order to melt a section of said line.

6. A parachute line cutting device as claimed in claim 5, **characterised in that** said cutter member (5) is provided for applying a double-cut to said line.

## Patentansprüche

1. Schneidevorrichtung für ein Fallschirmseil (1) umfassend ein Schneideglied (5), das im Inneren eines ersten Gehäuses (2) befestigt ist, das eine Öffnung (3) aufweist, die einen Durchlass für das Fallschirmseil bereitstellt, wobei die Schneidevorrichtung ferner ein Zündelement (10) umfasst, das zum Hinausschleudern des Schneideglieds in Richtung des Seils bereitgestellt wird, nachdem dies gezündet worden ist, um das Letztgenannte durchzuschneiden, wobei das Zündelement mit flexiblen elektrischen Drähten (12, 13) verbunden ist, die selbst mit einer Energieversorgungsquelle verbunden werden können, **dadurch gekennzeichnet, dass** die Drähte von mindestens einem Verstärkungsband (18) umgeben sind, das aus einem Material gefertigt ist, das weniger elastisch als die Drähte ist, wobei das Verstärkungsband an einem zweiten Gehäuse (9) befestigt ist, in dem das Zündelement untergebracht ist.

2. Schneidevorrichtung für ein Fallschirmseil nach Anspruch 1, **dadurch gekennzeichnet, dass** das Band oder die Bänder (18) um einen starren Stift (24) geknüpft (19) sind, der insbesondere aus Edelstahl gefertigt ist und in einer Aussparung untergebracht ist, die in das zweite Gehäuse eingepasst ist.

3. Schneidevorrichtung für ein Fallschirmseil nach Anspruch 1 oder 2, **dadurch gekennzeichnet, dass** die flexiblen elektrischen Drähte an ihren Enden (14, 15) erstarrt sind, die im Inneren des zweiten Gehäuses angeordnet sind, um einen steifen Abschnitt zu bilden, an den eine Feindrahtbrücke (16) elektrisch gebunden ist.

4. Schneidevorrichtung für ein Fallschirmseil nach Anspruch 3, **dadurch gekennzeichnet, dass** der steife Abschnitt innerhalb eines versteifenden Materials (17) insbesondere Epoxid oder Kautschuk gegossen ist, und wobei die erstarrten Drahtenden (14, 15) leicht über das gegossene, versteifende Material hinaus verlaufen.

5. Schneidevorrichtung für ein Fallschirmseil nach einem der vorhergehenden Ansprüche 1 bis 4, **dadurch gekennzeichnet, dass** das Seil aus einem schmelzbaren Material gefertigt ist, wobei das Zündelement (10) bereitgestellt wird, um bei einer Zündung genug im Schneideglied zu speichernde Wärme zu erzeugen, die ausreicht, um einen Abschnitt des Seils zu schmelzen.

6. Schneidevorrichtung für ein Fallschirmseil nach Anspruch 5, **dadurch gekennzeichnet, dass** das Schneideelement (5) zum Anwenden eines doppelten Schnitts auf das Seil bereitgestellt wird.

## Revendications

1. Dispositif de coupure (1) d'une ligne de parachute comprenant un membre de coupe (5) monté à l'intérieur d'un premier logement (2) ayant une ouverture (3) fournissant un passage pour ladite ligne de parachute, ledit dispositif de coupure comprenant en outre un élément de mise à feu (10) prévu pour projeter ledit membre de coupe vers ladite ligne après avoir été amorcé en vue de couper cette dernière, ledit élément de mise à feu étant connecté à des fils électriques flexibles (12, 13) qui peuvent eux-mêmes être connectés à une source d'alimentation en courant, **caractérisée en ce que** lesdits fils sont entourés par au moins un cordon de renforcement (18) fait d'un matériau qui est moins élastique que lesdits fils, ledit cordon de renforcement étant fixé à un deuxième logement (9) dans lequel ledit élément de mise à feu est logé.

2. Dispositif de coupure d'une ligne de parachute comme revendiqué dans la revendication 1, **caractérisé en ce que** le(s) cordon(s) (18) sont noués (19) autour d'une broche rigide (20), en particulier en acier inoxydable, logée dans un évidement adapté à l'intérieur du deuxième logement.

3. Dispositif de coupure d'une ligne de parachute comme revendiqué dans la revendication 1 ou 2, **caractérisé en ce que** les fils électriques flexibles sont solidifiés à leurs extrémités (14, 15) situées à l'intérieur dudit deuxième logement afin de former une partie rigide à laquelle un fin pont de fil (16) est électriquement relié.

4. Dispositif de coupure d'une ligne de parachute comme revendiqué dans la revendication 3, **caractérisé en ce que** ladite partie rigide est moulée à l'intérieur d'un matériau rigidifiant (17), en particulier de l'époxy ou du caoutchouc, et dans lequel les extrémités de fil solidifiées (14, 15) s'étendent légèrement au-delà du matériau rigidifiant moulé.

5. Dispositif de coupure d'une ligne de parachute comme revendiqué dans une quelconque des revendications 1 à 4, **caractérisé en ce que** ladite ligne est faite en matériau fusible et dans lequel ledit élément de mise à feu (10) est prévu pour produire lors de l'amorçage, suffisamment de chaleur pour être accumulée dans le membre de coupe (5) pour fondre une partie de ladite ligne.

6. Dispositif de coupure d'une ligne de parachute comme revendiqué dans la revendication 5, **caractérisé en ce que** ledit membre de coupe (5) est prévu pour appliquer une double coupure à ladite ligne.
